# FASCICULE DE BREVET EUROPEEN

(11) **EP 2 981 735 B1**
(45) Date de publication et mention de la délivrance du brevet: **04.11.2020**
(21) Numéro de dépôt: 14718769.4
(22) Date de dépôt: 01.04.2014
(51) Int. Cl.: F16G 5/04, F16G 5/06, F16G 5/20, D03D 11/00, D02G 1/00

(54) **COURROIE DE TRANSMISSION DE PUISSANCE PRESENTANT UNE DENTURE A BASE ELASTOMERIQUE MUNIE, EN SURFACE, D'UN TRICOT.**
TREIBRIEMEN MIT EINER ELASTOMERVERZAHNUNG MIT STOFF AUF DER OBERFLÄCHE
POWER TRANSMISSION BELT HAVING AN ELASTOMER TOOTHING PROVIDED WITH FABRIC ON THE SURFACE

(30) Priorité: 02.04.2013 FR 1352960
(43) Date de publication de la demande: 10.02.2016
(73) Titulaire: Hutchinson, 75008 Paris (FR)
(72) Inventeur: BLANCHET, Guillaume, F-37390 Mettray (FR); ROGNON, Julie, F-37540 Saint Cyr Sur Loire (FR); VAN EIBERGEN, Arthur, F-45120 Montargis (FR); VARIN, Hervé, F-37300 Joue-les-tours (FR)
(74) Mandataire: Gevers & Orès
(86) Numéro de dépôt international: PCT/IB2014/060346
(87) Numéro de publication internationale: WO 2014/162259

(56) Documents cités:
- EP-A1- 0 965 771
- EP-A1- 2 166 251
- WO-A1-2007/093473
- DE-A1-102010 015 901
- US-A1- 2010 167 860
- US-B1- 6 685 785

## Description

La présente invention concerne une courroie de transmission de puissance présentant une denture à base élastomérique munie, en surface, d'un tricot.

Une telle courroie comme, divulguée dans DE102010015901 A1, est par exemple utilisée pour les moteurs à combustion interne.

Un moteur à combustion interne tourne selon une loi quasi - sinusoïdale autour de sa vitesse nominale. La variation de vitesse par rapport à une sinusoïdale parfaite est liée aux combustions successives sur les cylindres. Le phénomène typique des moteurs à combustion interne appelé acyclisme et cet acyclisme est d'autant plus significatif que le taux de compression dans les cylindres est élevé (cas des moteurs diesel en particulier) et/ou le nombre de cylindres réduit. Cet acyclisme se transmet aux accessoires du moteur tels que la pompe à eau, la direction assistée, la climatisation ou encore l'alternateur.

Certains de ces accessoires, tel que l'alternateur, possèdent des inerties élevées qui, couplées avec le phénomène d'acyclisme, engendrent des niveaux de couples dynamiques importants. Ces niveaux de couple se transforment en écarts de tension très importants sur la courroie et modifient les propriétés tribologiques à l'interface entre la poulie d'entraînement de l'accessoire considéré et la courroie.

Ainsi, lorsqu'une courroie passe par des niveaux de tension trop bas, elle peut glisser sur la poulie. L'entraînement n'est alors plus assuré, ce qui peut générer du bruit.

Lorsqu'une courroie possède un coefficient de frottement trop élevé, on peut observer un phénomène d'accrochage important de la courroie sur la poulie suivi d'un décrochage brusque de cette courroie (connu sous le phénomène de « stick-slip » dans la terminologie anglo-saxonne). Ce phénomène est générateur de bruit.

Un autre phénomène susceptible de provoquer du bruit est le désalignement relatif de deux poulies successives (par exemple la poulie du moteur et la poulie d'alternateur). Ce phénomène est très dépendant de facteurs tels que la longueur du brin de courroie reliant ces deux poulies, la nature des matériaux formant la courroie, la structure de cette courroie ou encore du coefficient de frottement entre la poulie et le flanc de denture de la courroie.

En particulier, un tel désalignement combiné à un coefficient de frottement élevé génère un bruit important car cela favorise le phénomène de « stick-slip ».

Pour résoudre ces problèmes de bruit, il a déjà été proposé de mettre en œuvre, à la surface de la denture à base élastomérique, un tricot.

Un exemple d'une telle courroie est proposé dans le document US 2008/0261739 (D1).

A cet effet, la courroie comporte en surface un tricot chaîne comprenant deux types de fils dont l'un présente un module supérieur ou égale à 5N/1000 dtex (basé sur une extension de 5%) et dont l'autre présente un module inférieur ou égale à 2 cN/dtex (basé sur une extension de 5%), les fils formant un réseau dans lequel ils ne sont pas enroulés ensemble et par ailleurs dans lequel le tricot chaîne est construit d'une manière particulière, à savoir en « countemotation » selon la terminologie anglo-saxonne.

Le cas particulier présenté dans ce document est d'utiliser un premier fil en polyamide et un deuxième fil en élasthanne (polyuréthane).

Selon la demandeur du document D1, la courroie ainsi obtenue présente des performances améliorées par rapport à la génération de bruit tout en répondant aux exigences de durée de vie (résistance à l'abrasion).

Toutefois, il convient de noter qu'une source de bruit possible pour la courroie existe également en conditions humides. En effet, outre les contraintes précitées, du bruit peut être généré par la courroie en conditions humides.

Pour traiter ce cas particulier de la génération de bruit en conditions humides, D1 propose d'ajouter un traitement antifriction à la courroie à la surface du tricot chaîne. Ce traitement résulte en la formation d'une couche externe sur le tricot chaîne formée par une combinaison d'un polyuréthane et d'un lubrifiant, avantageusement pris dans la famille des fluoropolymères, tel que le PTFE.

Le polyuréthane de cette couche externe semble coopérer avec l'élasthanne compris dans le tricot pour réduire la génération de bruit en conditions humides.

Le document US 2010/0167860 (D2) divulgue également des courroies de transmission de puissance présentant une denture à base élastomérique munie, en surface, d'un tricot en vue de réduire la génération de bruit.

Le cas particulier d'un tricot comportant un premier fil en polyamide et un deuxième fil en polyuréthane fait l'objet de l'exemple 15 (Ex-15) du tableau 1 du document D2.

Les résultats concernant la réduction du bruit, en conditions sèches, sont fournis au tableau 3 du document D2.

Dans le tableau 3 du document D2, on note que la courroie selon l'exemple 15 génère moins de bruit qu'une courroie non munie d'un tricot en surface (CE-6), ce qui est cohérent avec le contenu du document D1. Toutefois, les tableaux 1 et 3 du document D2 montrent que l'utilisation de coton (Ex-11) à la place de polyamide (Ex-15) pour former le premier fil apportent des performances améliorées quant à la génération de bruit.

En conditions humides, on peut se référer aux tableaux 4 et 6.

Le tableau 4 précise le cas particulier d'un tricot comportant un premier fil en polyamide et un deuxième fil en polyuréthane dans l'exemple 21 (Ex-21). Le remplacement du premier fil en polyamide par du coton (cellulose) fait l'objet de l'exemple 17 (Ex-17).

Comme on peut le constater dans le tableau 6, l'utilisation de coton à la place de polyamide semble également améliorer, en conditions humides, le comportement au bruit de la courroie.

Du point de vue de la diminution du bruit généré par la courroie, la solution proposée dans le document D2 (fil principal en coton + fil secondaire en polyuréthane) apparaît donc meilleure que la solution proposée dans le document D1 (fil principal en polyamide + fil secondaire en polyuréthane), en conditions sèches ou en conditions humides.

Par ailleurs, la solution proposée dans le document D1 ne met pas en œuvre une couche d'antifriction à la surface du tricot externe pour améliorer le comportement au bruit en conditions humides.

Il convient de noter que pour les tests réalisés dans le document D2, la nature du tricot n'est pas fournie. Toutefois, il apparaît que seul un tricot trame est en réalité envisagé.

Un objectif de l'invention est de proposer une courroie de conception alternative aux courroies connues, offrant des performances améliorées sur le comportement au bruit à l'humide.

Un autre objectif de l'invention est de proposer une courroie de conception alternative aux courroies connues, offrant à la fois des performances améliorées sur le comportement au bruit en conditions humides et des performances comparables sur le comportement au bruit en conditions sèches.

Un autre objectif de l'invention est de proposer une courroie de conception alternative aux courroies connues, offrant des performances améliorées tant en conditions humides qu'en conditions sèches.

Un autre objectif de l'invention est de proposer une courroie atteignant l'un au moins des objectifs de comportement au bruit précités et présentant également un comportement à l'abrasion satisfaisant.

A cet effet, l'invention propose une courroie de transmission de puissance présentant une denture à base élastomérique qui est revêtue en surface d'un tricot réalisé avec un fil principal en polyamide ou cellulosique et un fil secondaire en polyuréthane, caractérisée en ce que le tricot présente un grammage d'au moins 150g/m² lorsque le fil principal est cellulosique et d'au moins 200g/m² lorsque le fil principal est en polyamide.

Cette courroie pourra également présenter l'une au moins des caractéristiques suivantes, prise seule ou en combinaison :
- le grammage est inférieur ou égal à 300g/m² ;
- le grammage est compris entre 200g/m² et 300g/m², de préférence entre 200g/m² et 250g/m² ;
- le fil secondaire est de l'élasthanne ;
- elle comprend au moins un fil synthétique guipant le fil secondaire ;
- le fil secondaire est guipé par un premier fil synthétique, ce dernier étant lui-même guipé par au moins un deuxième fil synthétique ;
- le fil synthétique ou, selon le cas, chaque fil synthétique, est choisi parmi le polyamide (PA), le polyéthylène (PE), le polypropylène (PP) ou le polytéréphtalate éthylène (PET) ;
- le fil synthétique est texturé ;
- elle comprend, entre la denture à base élastomérique et le tricot, une couche barrière pour améliorer la tenue à l'abrasion ;
- la couche barrière est en thermoplastique élastomérique TPE ou TPV ayant une matrice polymère qui est la combinaison d'une matrice thermoplastique et d'une matrice élastomérique ;
- la matrice élastomérique du thermoplastique élastomérique TPE ou TPV est un éthylène alpha oléfine tel que l'EPM ou l'EPDM ;
- la matrice thermoplastique du thermoplastique élastomérique TPE ou TPV est un thermoplastique oléfinique (TPO), par exemple un polyéthylène basse densité LDPE ;
- la denture est réalisée à base d'élastomère éthylène alpha oléfinique, par exemple un EPM ou un EPDM ;
- le tricot est un tricot trame ;
- le tricot trame est du type cote 2x2.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue générale, en coupe, d'une courroie de transmission de puissance présentant une denture à base élastomérique munie, en surface, d'un tricot ;
- la figure 2(a) est une vue partielle en perspective d'une courroie conforme à celle de la figure 1 sur laquelle est prévue un tricot trame et la figure 2(b) une vue agrandie du tricot trame concerné, en l'occurrence de type cote 2x2 ;
- la figure 3 représente une courroie selon une variante de réalisation de la courroie illustrée sur la figure 1, sur laquelle il est prévu une couche barrière entre la denture et le tricot.

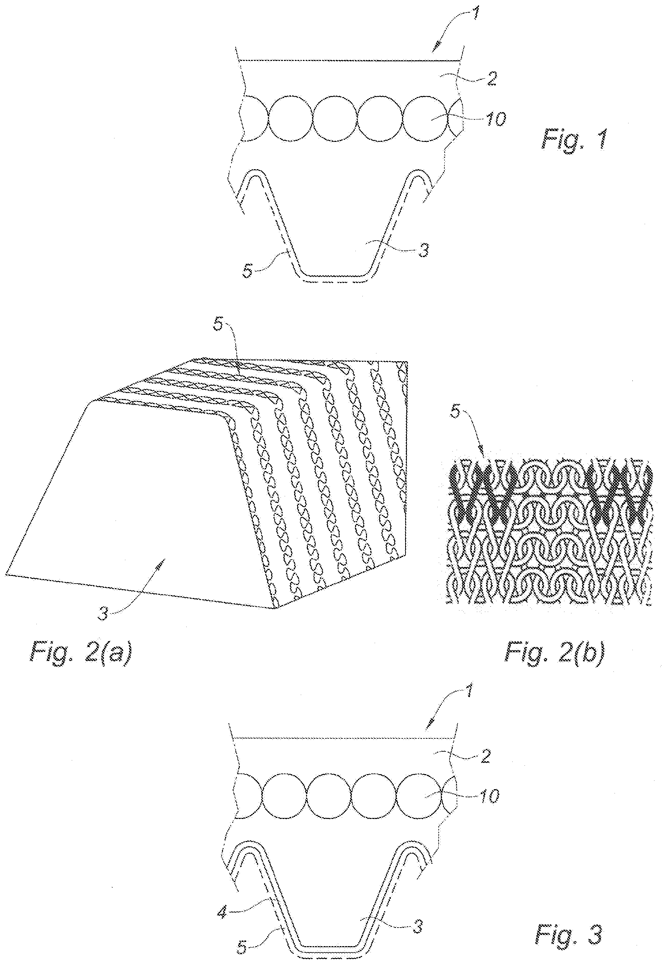

Une courroie de transmission de puissance conforme à l'invention est représentée sur la figure 1.

Cette courroie 1 présente une denture 3 à base élastomérique qui est revêtue en surface d'un tricot 5 réalisé avec un fil principal en polyamide (PA) ou cellulosique et un fil secondaire en polyuréthane. La denture 3 à base élastomérique peut être à base d'élastomère éthylène alpha oléfinique, de type éthylène-propylène-diène-monomère (EPDM) ou éthylène-propylène-monomère (EPM). La courroie comporte par ailleurs une couche dorsale 2 dans laquelle sont noyés des fils de renfort mécanique 10.

Cette courroie peut être une courroie pour application automobile, de type K.

Le tricot est avantageusement un tricot trame.

Le polyuréthane formant le fil secondaire est avantageusement de l'élasthanne.

Des résultats d'essais sont fournis dans le tableau 3.

Dans ces essais, le fil secondaire est de l'élasthanne. Ces essais se distinguent les uns des autres, soit par la nature du fil principal (polyamide ; cellulosique) et/ou par la nature du tricot utilisé (tricot trame de type jersey ou tricot trame de type cote 2x2) et/ou le grammage de ce tricot.

La courroie CREF est une courroie de référence comportant un fil principal cellulosique et un fil secondaire en élasthanne. La courroie CREF est une courroie du type de celle qui est proposée dans le document d'art antérieur D2, avec un grammage classique pour l'homme du métier. Un grammage de 110 ou 120g/m² est ce qu'on rencontre de plus élevé dans l'état de la technique, ce grammage étant généralement inférieur à 100g/m².

Pour déterminer les valeurs permettant de caractériser le comportement au bruit d'une courroie, on réalise chaque test selon les modalités qui suivent.

En conditions sèches, les tests consistent chacun en un test acoustique (bruit) de la courroie sur banc de désalignement conçu sur la base du protocole de test JA2432-2000 décrit dans les normes SAE. A cet effet, la courroie est montée sur deux poulies, à savoir une poulie motrice et une poulie menée par l'intermédiaire de la courroie, où la poulie menée est désalignée, par rapport à la poulie motrice, conformément à ce protocole de test. La courroie est par ailleurs mise sous tension par un tendeur.

Le détail de l'installation de test est fourni dans le tableau 1 ci-dessous. Le centre géométrique (O) de la poulie motrice sert d'origine dans un référentiel orthonormé (O ; X ;Y). Les positions, dans ce référentiel, du galet fixe, de la poulie menée et du tendeur sont précisées dans ce tableau 1.

**tableau 1**

| | diamètre effectif (mm) | abscisse X (mm) | ordonnée Y (mm) |
|---|---|---|---|
| poulie motrice | 100 | 0 | 0 |
| galet fixe | 80 | 155 | 20 |
| poulie menée | 158 | 301 | 0 |
| tendeur réglable | 60 | 140 | 151,4 |

Les conditions de test sont les suivantes :
- la poulie motrice tourne à 2000 tr/mn ;
- la tension appliquée sur l'axe tendeur est constante, d'environ 40 daN ;
- la température est comprise entre 20° et 25°C (température ambiante);
- le taux d'humidité relative est de 50% ;
- l'angle de désalignement est incrémenté tous les 0,5°, depuis la valeur nulle (pas de désalignement) jusqu'à la valeur de 5°.

La courroie est une courroie automobile de type 6PK (1200mm de largeur), dont la denture 3 est réalisée en EPDM. Avant d'effectuer la mesure proprement dite, la courroie est stabilisée en température et hygrométrie pendant 24 heures, à une température de 20°C à 25°C (température ambiante) et à un taux d'humidité relative de 50%.

La mesure consiste à déterminer l'angle de désalignement entre la poulie motrice et la poulie menée auquel apparaît le grincement. Le grincement est caractérisé par un bruit audible.

Pour classer les différentes courroies, une échelle s'étalant entre la valeur nulle (0) et la valeur (5) dont les extrémités sont définies comme suit :
- si le bruit est audible pour un angle de désalignement strictement inférieur à 1°, alors on attribue la valeur nulle (0),
- si le bruit est audible pour un angle de désalignement supérieur ou égal à 1° et strictement inférieur à 1,5°, alors on attribue la valeur unité (1) ;
- si le bruit est audible pour un angle de désalignement supérieur ou égal à 1,5° et strictement inférieur à 2°, alors on attribue la valeur deux (2) ;
- si le bruit est audible pour un angle de désalignement supérieur ou égal à 2° et strictement inférieur à 2,5°, alors on attribue la valeur trois (3) ;
- si le bruit est audible pour un angle de désalignement supérieur ou égal à 2,5° et strictement inférieur à 5°, alors on attribue la valeur quatre (4) ;
- si aucun bruit n'est audible pour un angle de désalignement égal à 5°, alors on attribue la valeur cinq (5), le test s'arrêtant pour cette valeur de 5°.

En conditions humides, les tests consistent à placer la courroie sur un moteur thermique DW8 de cinématique 5 axes (accessoires : alternateur et direction assistée seulement). Ce moteur est un moteur série du commerce, connu de l'homme du métier.

Le détail de l'installation de test est fourni dans le tableau 2 ci-dessous. Le centre géométrique (O) du vilebrequin du moteur sert d'origine dans un référentiel orthonormé (O ; X ;Y). Les positions, dans ce référentiel, du tendeur de la courroie, de l'alternateur, de la direction assistée et du galet sont précisées dans ce tableau 2.

**tableau 2**

| | diamètre effectif (mm) | abscisse X (mm) | ordonnée Y (mm) |
|---|---|---|---|
| vilebrequin | 143,6 | 0 | 0 |
| tendeur réglable fixe | 70 | 131,6 | 69,6 |
| alternateur | 62,5 | 230,3 | 67,3 |
| direction assistée | 113,2 | 212,9 | 210,9 |
| galet | 38,2 | 77,6 | 124,6 |

Les conditions de tests sont décrites ci-dessous.

La tension de pose de la courroie est de 115 N/dt/b (Newton/dent/brin). Cette tension est obtenue par le réglage d'un tendeur de courroie.

On procède à la mise en rotation du moteur au ralenti (850tr/mn) sans charge accessoire pendant une durée de 15 minutes.

Puis, on asperge la courroie pendant une durée de 30s avec une quantité de 300ml d'eau.

Ensuite, on laisse tourner le moteur au ralenti sans charge d'accessoires pendant une durée de 15 minutes.

Le moteur tournant toujours au ralenti, on procède alors à la mise en charge simultanée de l'alternateur (en l'occurrence de 70A) et de la direction assistée (fonctionnant à 50 bars) en aspergeant la courroie pendant une durée de 30s, avec une quantité de 300ml d'eau.

On laisse à nouveau tourner le moteur au ralenti sans charge d'accessoires pendant 15 minutes.

Enfin, on procède à nouveau à la mise en charge simultanée de l'alternateur et de la direction assistée en aspergeant la courroie pendant une durée de 5s, avec une quantité de 5ml d'eau.

La mesure est effectuée lors de cette dernière aspersion.

Cette mesure consiste d'une part, à mesurer le temps écoulé entre le début de l'aspersion de la courroie (début de la mesure), laquelle coïncide avec l'apparition d'un bruit audible, et le moment où ce bruit n'est plus audible (fin de la mesure) et d'autre part, à mesurer le niveau de bruit maximum atteint pendant cet intervalle de temps.

Cette mesure fournit le comportement au bruit de la courroie testée.

La courroie est une courroie pour application automobile de type 6 PK (1200 mm de largeur), dont la denture 3 est réalisée en EPDM.

Le comportement au bruit est alors traduit sur une échelle de valeurs, s'étalant entre la valeur nulle (0) et la valeur cinq (5), qui prend en compte la durée du bruit audible, s'il existe.

Plus précisément, l'échelle se décompose comme suit :
- si le bruit est audible sur une durée supérieure ou égale à 14s, alors on attribue la valeur nulle (0) ;
- si le bruit est audible sur une durée supérieure ou égaie à 11s et strictement inférieure à 14s, alors on attribue la valeur unité (1) ;
- si le bruit est audible sur une durée supérieure ou égale à 7s et strictement inférieure à 11s, alors on attribue la valeur deux (2) ;
- si le bruit est audible sur une durée supérieure ou égale à 4s et strictement inférieure à 7s, alors on attribue la valeur trois (3) ;
- si le bruit est audible sur une durée strictement inférieure à 4s, alors on attribue la valeur quatre (4) ;
- en l'absence de bruit audible, on attribue la valeur cinq (5).

Des résultats, en conditions sèches et humides sont fournis ci-dessous, pour différentes courroies pour application automobile. Les « valeurs » attribuées par les échelles précisées précédemment sont fournies dans les dernières lignes du tableau.

**tableau 3**

| | CREF (hors invention) | C1 (invention) | C2 (hors invention) | C3 (invention) | C4 (invention) |
|---|---|---|---|---|---|
| **nature du tricot** | jersey | Cote2x2 | Cote 2x2 | jersey | Cote 2x2 |
| **grammage du tricot (g/m²)** | 110 | 150 | 125 | 200 | 230 |
| **nature du fil principal** | cellulose | cellulose | PA | PA | PA |
| **valeur (humide)** | 1 | 3 | 1 | 2 | 5 |
| **valeur (sec)** | 2 | 2 | 0 | 3 | 4 |

On note que dans le cas où le fil principal est cellulosique (courroie C1), un grammage d'au moins 150g/m² du tricot permet d'améliorer les performances au bruit en conditions humides, par rapport à la courroie CREF. Cette amélioration de la performance en conditions humides s'effectue sans perte de performance en conditions sèches, toujours par rapport à la courroie CREF.

Lorsque le fil principal est en polyamide, un grammage du tricot d'au moins 200g/m² est nécessaire pour avoir des performances améliorées en conditions humides (courroies C3 et C4). Une amélioration en de la performance au bruit est alors également constatée en conditions sèches.

Le meilleur résultat est obtenu pour un grammage allant au-delà de 200g/m² pour un tricot trame de type cote 2x2 (courroie C4).

Par comparaison à la courroie C3, la courroie C4 présente un grammage légèrement plus élevé et un tricot trame différent, en l'occurrence de type cote 2x2. Outre l'effet du grammage, les inventeurs considèrent que l'utilisation d'un tricot trame de type cote 2x2 apporte un gain de performance par rapport à un tricot trame de type jersey. L'explication pourrait être liée au fait que le cote 2x2 présente, à grammage comparable, un réseau plus dense que le jersey.

Par ailleurs, quel que soit le type de courroie conforme à l'invention, il n'apparaît pas nécessaire de mettre en œuvre un tricot présentant un grammage allant au-delà de 300g/m², voire même au-delà de 250g/m². Ainsi, pour l'ensemble des courroies conformes à l'invention, le grammage peut être compris entre 200g/m² et 300g/m², de préférence entre 200g/m² et 250g/m².

Les inventeurs ont par ailleurs pu montrer qu'un guipage avec un fil synthétique du fil secondaire permettait d'améliorer encore plus les performances au bruit.

Les résultats sont présentées dans le tableau 4 (dans le tableau 3, les courroies ne présentent pas de guipage du fil secondaire).

En l'occurrence, le fil synthétique guipant le fil secondaire en polyuréthane est un fil polyamide (PA).

Le fil secondaire de la courroie C5 est de l'élasthanne.

**tableau 4**

| | CREF (hors invention) | C1 (invention) | C5 (invention) |
|---|---|---|---|
| **assemblage du fil secondaire** | fil non guipé | fil non guipé | fil guipé PA |
| **nature du tricot** | jersey | Cote2x2 | jersey |
| **grammage du tricot (s/m²)** | 110 | 150 | 200 |
| **nature du fil principal** | cellulose | cellulose | cellulose |
| **valeur (humide)** | 1 | 3 | 4 |
| **valeur (sec)** | 2 | 2 | 3 |

La comparaison de la courroie C5 à la courroie CREF met en évidence qu'une courroie munie, en surface, d'un tricot d'un grammage compris entre 150g/m² et 300g/m² et d'un guipage du fil secondaire apporte une amélioration sur la performance au bruit, en conditions sèches comme en conditions humides.

Par ailleurs, la comparaison de la courroie C5 à la courroie C1 montre que le guipage a probablement un effet dans les très bons résultats obtenus pour cette courroie C5. En effet, le jersey en grammage 200g/m² semble, à la lecture du tableau 4, offrir une performance comparable au cote 2x2 en grammage 150g/m², si bien que l'écart de performance mesurée à l'avantage de la courroie C5 apparaît traduire un effet bénéfique du seul guipage. D'ailleurs, ceci est confirmé par les résultats présentés ci-après à l'appui du tableau 5.

En d'autres termes, le guipage du fil secondaire apporte une amélioration complémentaire à celle qui est réalisée par le choix motivé du grammage.

Ce fil synthétique peut être du polyamide (PA), du polyéthylène (PE), du polypropylène (PP) ou du polytéréphtalate d'éthylène (PET).

Par ailleurs, le fil secondaire peut être guipé par un premier fil synthétique, ce dernier étant lui-même guipé par au moins un deuxième fil synthétique. Dans ce cas, chaque fil synthétique est choisi parmi le PA, le PP, le PE ou le PET.

Enfin, le fil synthétique peut être texturé. Cela procure un effet gonflant au fil synthétique ainsi texturé, lequel effet est susceptible d'améliorer le comportement de la courroie en conditions humides.

Le tableau 5 compare une courroie C6 se distinguant de la courroie CREF par la seule présence d'un fil de guipage en polyamide autour du fil secondaire, qui est en l'occurrence en élasthanne.

**Tableau 5**

| | CREF (hors invention) | C6 (invention) |
|---|---|---|
| **assemblage du fil secondaire** | fil non guipé | fil guipé PA |
| **nature du tricot** | jersey | jersey |
| **grammage du tricot (g/m²)** | 110 | 120 |
| **nature du fil principal** | cellulose | cellulose |
| **valeur (humide)** | 1 | 4 |
| **valeur (sec)** | 2 | 4 |

La comparaison de la courroie C6 à la courroie de référence CREF confirme que le guipage seul permet d'améliorer les performances au bruit, tant en conditions sèches qu'en conditions humides.

Ainsi, l'invention concerne également une courroie de transmission de puissance présentant une denture 3 à base élastomérique qui est revêtue en surface d'un tricot réalisé avec un fil principal en polyamide ou cellulosique et un fil secondaire en polyuréthane, caractérisée en ce que le fil secondaire est guipé avec un fil synthétique.

Le fil secondaire peut être de l'élasthanne.

Le fil secondaire peut être guipé par un premier fil synthétique, ce dernier étant lui-même guipé par au moins un deuxième fil synthétique.

Le fil synthétique ou, selon le cas, chaque fil synthétique, est choisi parmi polyamide (PA), le polyéthylène (PE), le polypropylène (PP) ou le polytéréphtalate éthylène (PET).

Le fil synthétique servant au guipage peut être texturé.

Le tricot est avantageusement un tricot trame. Le tricot trame peut être du type jersey ou du type cote 2x2.

Enfin, la courroie peut comprendre, entre la denture à base élastomérique et le tricot, une couche barrière pour améliorer la tenue à l'abrasion.

Les différents types de courroies conformes à l'invention décrits précédemment offrent également une très bonne résistance à l'abrasion. Ceci est en particulier lié à la nature des matériaux formant le tricot, tel que le polyamide ou la cellulose. Sur ce plan, on peut d'ailleurs se référer aux documents D1 et/ou D2.

Cependant, et comme précisé précédemment, si l'on souhaite améliorer la résistance à l'abrasion, il est avantageux de prévoir, entre la denture 3 à base élastomérique et le tricot 5, une couche barrière 4 pour améliorer la tenue à l'abrasion.

Une telle couche barrière est représentée, dans son environnement, sur la figure 3.

Par exemple, il peut s'agir d'une couche barrière en TPE (thermoplastique non réticulé) ou TPV (thermoplastique partiellement ou totalement réticulé) ayant une matrice polymère qui est la combinaison d'une matrice thermoplastique et d'une matrice élastomérique. La partie élastomérique du thermoplastique élastomérique TPE ou TPV est avantageusement un éthylène alpha oléine tel que l'EPM ou l'EPDM. La matrice thermoplastique du thermoplastique élastomérique TPE ou TPV est avantageusement un thermoplastique oléfinique (TPO), par exemple un polyéthylène basse densité LDPE (pour « Low Density PolyEthylene » selon la terminologie anglo-saxonne).

L'épaisseur de cette couche barrière peut être comprise entre 50 microns et 500 microns.

Lors de la fabrication, le tricot est alors partiellement inclus dans une partie de l'épaisseur de cette couche barrière, ce qui assure une bonne tenue de l'ensemble.

Il convient toutefois de rappeler qu'une courroie conforme à l'invention réalisée avec un tricot dont le fil principal est en polyamide présente généralement une résistance à l'abrasion meilleure que la même courroie dans laquelle le fil principal en polyamide est remplacé par un fil principal cellulosique.

Dans le cadre de l'invention, et à titre d'exemple non limitatif, on pourra donc choisir une courroie avec, en surface, un tricot dont le fil principal est en polyamide et le fil secondaire en polyuréthane pour lequel le grammage du tricot est supérieur à 200g/m² si l'on souhaite obtenir les meilleurs performances tant sur le bruit en conditions sèches et conditions humides que sur l'abrasion.

Une couche barrière du type de celle décrite à l'appui de la figure 3 peut être ajoutée.

Selon un autre exemple non limitatif, on pourra remplacer le fil principal en polyamide par un fil principal cellulosique en prévoyant un grammage supérieur à 150g/m², en y associant par exemple une couche barrière telle que celle décrite à l'appui de la figure 3 pour améliorer les performances de résistance à l'abrasion et ainsi atteindre des performances identiques, en termes d'abrasion, à la courroie avec un fil principal en polyamide.

Dans ces deux derniers exemples, le tricot pourra en particulier être un tricot trame de type cote 2x2 avec éventuellement en plus, un guipage du fil secondaire, en particulier avec un fil synthétique du type précité (PA, PP, PE, PET), avantageusement texturé.

## Revendications

1. Courroie (1) de transmission de puissance présentant une denture (3) à base élastomérique qui est revêtue en surface d'un tricot (5) réalisé avec un fil principal en polyamide ou cellulosique et un fil secondaire en polyuréthane, **caractérisée en ce que** le tricot présente un grammage d'au moins 150g/m² lorsque le fil principal est cellulosique et d'au moins 200g/m² lorsque le fil principal est en polyamide.

2. Courroie (1) selon la revendication 1, **caractérisée en ce que** le grammage est :
- d'au moins 150g/m² et inférieur ou égal à 300g/m² lorsque le fil principal est cellulosique ;
- d'au moins 200g/m² et inférieur ou égal à 300g/m² lorsque le fil principal est en polyamide.

3. Courroie (1) selon l'une des revendications précédentes, **caractérisée en ce que** le grammage est compris entre 200g/m² et 300g/m², de préférence entre 200g/m² et 250g/m².

4. Courroie (1) selon l'une des revendications précédentes, **caractérisée en ce que** le fil secondaire est de l'élasthanne.

5. Courroie (1) selon l'une des revendications précédentes, **caractérisée en ce qu'**elle comprend au moins un fil synthétique guipant le fil secondaire.

6. Courroie (1) selon la revendication précédente, **caractérisée en ce que** le fil secondaire est guipé par un premier fil synthétique, ce dernier étant lui-même guipé par au moins un deuxième fil synthétique.

7. Courroie (1) selon l'une des revendications 5 ou 6, **caractérisée en ce que** le fil synthétique ou, selon le cas, chaque fil synthétique, est choisi parmi le polyamide (PA), le polyéthylène (PE), le polypropylène (PP) ou le polytéréphtalate éthylène (PET).

8. Courroie (1) selon l'une des revendications 5 à 7, **caractérisée en ce que** le fil synthétique est texturé.

9. Courroie (1) selon l'une des revendications précédentes, **caractérisée en ce qu'**elle comprend, entre la denture (3) à base élastomérique et le tricot (5), une couche barrière (4) pour améliorer la tenue à l'abrasion.

10. Courroie (1) selon la revendication précédente, **caractérisée en ce que** la couche barrière (4) est en thermoplastique élastomérique TPE ou TPV ayant une matrice polymère qui est la combinaison d'une matrice thermoplastique et d'une matrice élastomérique.

11. Courroie (1) selon la revendication précédente, **caractérisée en ce que** la matrice élastomérique du thermoplastique élastomérique TPE ou TPV est un éthylène alpha oléfine tel que l'EPM ou l'EPDM.

12. Courroie (1) selon l'une des revendications 10 ou 11, **caractérisée en ce que** la matrice thermoplastique du thermoplastique élastomérique TPE ou TPV est un thermoplastique oléfinique (TPO), par exemple un polyéthylène basse densité LDPE.

13. Courroie (1) selon l'une des revendications précédentes, **caractérisée en ce que** la denture (3) est réalisée à base d'élastomère éthylène alpha oléfinique, par exemple un EPM ou un EPDM.

14. Courroie (1) selon l'une des revendications précédentes, **caractérisée en ce que** le tricot est un tricot trame.

15. Courroie (1) selon la revendication précédente, **caractérisée en ce que** le tricot trame est du type cote 2x2.

## Patentansprüche

1. Treibriemen (1), der eine Elastomerverzahnung (3) aufweist, die auf der Oberfläche mit einem Stoff (5), der aus einem Polyamid- oder Zellulosehauptgarn und einem Polyurethan-Nebengarn hergestellt ist, beschichtet ist, **dadurch gekennzeichnet, dass** der Stoff ein Flächengewicht von mindestens 150 g/m² aufweist, wenn das Hauptgarn aus Zellulose besteht, und von mindestens 200 g/m², wenn das Hauptgarn aus Polyamid besteht.

2. Riemen (1) nach Anspruch 1, **dadurch gekennzeichnet, dass** das Flächengewicht beträgt:
- mindestens 150 g/m² und kleiner oder gleich 300 g/m², wenn das Hauptgarn aus Zellulose besteht;
- mindestens 200 g/m² und kleiner oder gleich 300 g/m², wenn das Hauptgarn aus Polyamid besteht.

3. Riemen (1) nach einem der vorstehenden Ansprüche, **dadurch gekennzeichnet, dass** das Flächengewicht zwischen 200 g/m² und 300 g/m², vorzugsweise zwischen 200 g/m² und 250 g/m² liegt.

4. Riemen (1) nach einem der vorstehenden Ansprüche, **dadurch gekennzeichnet, dass** das Nebengarn Elasthan ist.

5. Riemen (1) nach einem der vorstehenden Ansprüche, **dadurch gekennzeichnet, dass** er mindestens ein synthetisches Garn umfasst, das das Nebengarn umspinnt.

6. Riemen (1) nach dem vorstehenden Anspruch, **dadurch gekennzeichnet, dass** das Nebengarn durch ein erstes synthetisches Garn umsponnen ist, wobei dieses Letztere selbst von mindestens einem zweiten synthetischen Garn umsponnen ist.

7. Riemen (1) nach einem der Ansprüche 5 oder 6, **dadurch gekennzeichnet, dass** das synthetische Garn oder, gegebenenfalls, jedes synthetische Garn, aus dem Polyamid (PA), dem Polyethylen (PE), dem Polypropylen (PP) oder dem Polyethylentherephthalat (PET) ausgewählt ist.

8. Riemen (1) nach einem der Ansprüche 5 bis 7, **dadurch gekennzeichnet, dass** das synthetische Garn texturiert ist.

9. Riemen (1) nach einem der vorstehenden Ansprüche, **dadurch gekennzeichnet, dass** er zwischen der Elastomerverzahnung (3) und dem Stoff (5) eine Barrierenschicht (4) zum Verbessern der Scheuerbeständigkeit umfasst.

10. Riemen (1) nach dem vorstehenden Anspruch, **dadurch gekennzeichnet, dass** die Barrierenschicht (4) aus thermoplastischem Elastomer TPE oder TPV besteht, der eine Polymermatrix aufweist, die die Kombination einer Thermoplastmatrix und einer Elastomermatrix ist.

11. Riemen (1) nach dem vorstehenden Anspruch, **dadurch gekennzeichnet, dass** die Elastomermatrix des thermoplastischen Elastomers TPE oder TPV ein Ethylen-Alpha-Olefin, wie EPM oder EPDM, ist.

12. Riemen (1) nach einem der Ansprüche 10 oder 11, **dadurch gekennzeichnet, dass** die Thermoplastmatrix des thermoplastischen Elastomers TPE oder TPV ein Olefin-Thermoplast (TPO) ist, zum Beispiel niedrigdichtes Polyethylen LDPE.

13. Riemen (1) nach einem der vorstehenden Ansprüche, **dadurch gekennzeichnet, dass** die Verzahnung (3) auf der Basis von Ethylen-Alpha-Olefin-Elastomer, zum Beispiel einem EPM oder einem EPDM, hergestellt ist.

14. Riemen (1) nach einem der vorstehenden Ansprüche, **dadurch gekennzeichnet, dass** der Stoff Kulierware ist.

15. Riemen (1) nach einem der vorstehenden Ansprüche, **dadurch gekennzeichnet, dass** die Kulierware vom Typ Rippenstrick 2x2 ist.

## Claims

1. Power transmission belt (1) having an elastomer-based toothing (3) that is coated, on the surface, with a fabric (5) made with a main polyamide or cellulosic thread and a secondary polyurethane thread, **characterised in that** the fabric has a basis weight of at least 150g/m² when the main thread is cellulosic and of at least 200g/m² when the main thread is made from polyamide.

2. Belt (1) according to claim 1, **characterised in that** the basis weight is:
- at least 150g/m² and less than or equal to 300g/m² when the main thread is cellulosic;
- at least 200g/m² and less than or equal to 300g/m² when the main thread is made from polyamide.

3. Belt (1) according to one of the preceding claims, **characterised in that** the basis weight is between 200g/m² and 300g/m², preferably between 200g/m² and 250g/m².

4. Belt (1) according to one of the preceding claims, **characterised in that** the secondary thread is elastane.

5. Belt (1) according to one of the preceding claims, **characterised in that** it comprises at least one synthetic thread covering the secondary thread.

6. Belt (1) according to the preceding claim, **characterised in that** the secondary thread is covered by a first synthetic thread, the latter being itself covered by at least one second synthetic thread.

7. Belt (1) according to one of claims 5 or 6, **characterised in that** the synthetic thread or, as the case may be, each synthetic thread, is selected from polyamide (PA), polyethylene (PE), polypropylene (PP) or polyterephtalate ethylene (PET).

8. Belt (1) according to one of claims 5 to 7, **characterised in that** the synthetic thread is textured.

9. Belt (1) according to one of the preceding claims, **characterised in that** it comprises, between the elastomer-based toothing (3) and the fabric (5), a barrier layer (4) to improve the abrasion resistance.

10. Belt (1) according to the preceding claim, **characterised in that** the barrier layer (4) is made from TPE or TPV elastomer thermoplastic having a polymer matrix which is the combination of a thermoplastic matrix and an elastomer matrix.

11. Belt (1) according to the preceding claim, **characterised in that** the elastomer matrix of the TPE or TPV elastomer thermoplastic is an alpha olefin ethylene such as EPM or EPDM.

12. Belt (1) according to one of claims 10 or 11, **characterised in that** the thermoplastic matrix of the TPE or TPV elastomer thermoplastic is an olefinic thermoplastic (TPO), for example a low-density polyethylene LDPE.

13. Belt (1) according to one of the preceding claims, **characterised in that** the toothing (3) is made of an alpha olefin ethylene elastomer base, for example an EPM or an EPDM.

14. Belt (1) according to one of the preceding claims, **characterised in that** the fabric is a knitted fabric.

15. Belt (1) according to the preceding claim, **characterised in that** the knitted fabric is of the 2x2 dimension type.
